Europäisches Patentamt

European Patent Office

Office européen des brevets

(19)

(11) Veröffentlichungsnummer: **0 054 783**
**B1**

(12) **EUROPÄISCHE PATENTSCHRIFT**

(45) Veröffentlichungstag der Patentschrift:
14.12.83

(51) Int. Cl.³: **B 01 D 53/14,** C 01 B 3/52

(21) Anmeldenummer: 81110133.6

(22) Anmeldetag: 04.12.81

(54) Verfahren und Anlage zum Abtrennen von Schwefelwasserstoff und Kohlendioxid aus einem Gasgemisch.

(30) Priorität: 18.12.80 DE 3047829

(43) Veröffentlichungstag der Anmeldung:
30.06.82 Patentblatt 82/26

(45) Bekanntmachung des Hinweises auf die Patenterteilung:
14.12.83 Patentblatt 83/50

(84) Benannte Vertragsstaaten:
BE DE FR GB NL

(56) Entgegenhaltungen:
EP - A - 0 012 986

LINDE-BERICHTEN AUS TECHNIK UND WISSENSCHAFT, Nr. 33, Mai 1973, Seiten 6-12 G. RANKE: "Die Vorteile der Rectisolwäsche bei der selektiven H2S-Entfernung aus Gasgemischen"

(73) Patentinhaber: Linde Aktiengesellschaft,
Abraham-Lincoln-Strasse 21, D-6200 Wiesbaden (DE)

(72) Erfinder: Ranke, Gerhard, Feichtetstrasse 6,
D-8134 Pöcking (DE)
Erfinder: Weiss, Horst, Neufriedenheimer Strasse 37a,
D-8000 München 70 (DE)

(74) Vertreter: Schaefer, Gerhard, Dr., Linde Aktiengesellschaft Zentrale Patentabteilung,
D-8023 Höllriegelskreuth (DE)

Verfahren und Anlage zum Abtrennen von Schwefelwasserstoff und Kohlendioxid aus einem Gasgemisch

Die Erfindung betrifft ein Verfahren zum Abtrennen von mindestens Schwefelwasserstoff und Kohlendioxid aus einem diese Komponenten enthaltenden Gasgemisch durch Wäsche mit einer physikalisch wirkenden Waschflüssigkeit, die für Schwefelwasserstoff ein besseres Lösungsvermögen als für Kohlendioxid besitzt, wobei aus der Wäsche mindestens ein erster mit Schwefelwasserstoff und Kohlendioxid beladener Waschflüssigkeitsstrom abgezogen und anschliessend durch Regenerierung in eine schwefelwasserstoffhaltige Gasphase und regenerierte Waschflüssigkeit zerlegt wird. Ausserdem betrifft die Erfindung eine zur Durchführung des Verfahrens geeignete Anlage.

Ein bei der Verarbeitung von Rohgasströmen häufig erforderlicher Verfahrensschritt ist die Abtrennung von Sauergasen, worunter im wesentlichen Kohlendioxid, Schwefelwasserstoff, Kohlenoxidsulfid, Blausäure und Merkaptane verstanden werden. Von diesen wegen ihrer korrodierenden oder katalysatorschädigenden Eigenschaften oder auch aus anderen Gründen von nachgeschalteten Anlagen fernzuhaltenden Verbindungen sind Kohlendioxid und Schwefelwasserstoff am häufigsten und im allgemeinen in höchster Konzentration in den Gasströmen enthalten.

Beispielhaft sei für derartige Gasströme auf Erdgas, Spaltgase und insbesondere auf wasserstoffhaltige Gasgemische hingewiesen. Zur Erzeugung wasserstoffreicher Gasgemische, wie sie etwa als Ausgangsgasgemische für Hydrierungen, für die Ammoniaksynthese, für die Methanolsynthese und weitere Synthesen dienen, wird heute üblicherweise von Rohölen, Raffinerie-Rückstandsölen, Kohle oder ähnlichen kohlenstoffhaltigen Stoffen ausgegangen. Diese Rohstoffe, die in den meisten Fällen Schwefel enthalten, werden einer oxidativen thermischen Spaltung mit Sauerstoff bei erhöhter Temperatur unterzogen. Nach Abscheidung von störenden Bestandteilen wie Russ, Teer, Naphthalinen, höheren Kohlenwasserstoffen und Wasser liegt dann ein Gasgemisch vor, das im wesentlichen aus Wasserstoff, Kohlenoxiden, Schwefelwasserstoff und Spuren von Stickstoff, Argon und Methan besteht. Ist es das Ziel, aus diesem Gas ein Ausgangsgemisch für Oxosynthesen, also ein im wesentlichen aus Kohlenmonoxid und Wasserstoff bestehendes Synthesegas, zu erzeugen, werden die Sauergase aus diesem Gas sofort entfernt. Wenn dagegen beabsichtigt ist, ein im wesentlichen nur aus Wasserstoff bestehendes Gas, beispielsweise Hydrierwasserstoff oder ein Ausgangsgasgemisch für die Ammoniaksynthese, zu gewinnen, dann wird das im Gas enthaltene Kohlenmonoxid einer Konvertierung mit Wasserdampf unterzogen, was zur Oxidation des Kohlenmonoxids zu Kohlendioxid und zur Bildung weiteren Wasserstoffs führt. Bei einer derartigen Konvertierung werden im Rohgas gegebenenfalls enthaltene Merkaptane und Kohlenoxidsulfid zu Schwefelwasserstoff reduziert, so dass das aus diesen Gasen zu entfernende Sauergas praktisch nur aus Kohlendioxid und Schwefelwasserstoff besteht.

Zur Entfernung dieser Gase werden neben anderen Verfahren seit Jahren in grossem Umfang physikalische Waschverfahren angewendet. Die dabei eingesetzten Waschflüssigkeiten lösen die Sauergasbestandteile ohne chemische Bindung und können von ihnen durch Entspannen, Erwärmen und/oder Destillieren wieder befreit werden. Insbesondere für die Abtrennung von Kohlendioxid und Schwefelwasserstoff haben sich polare organische Lösungsmittel und hierunter insbesondere das Methanol, das bei Temperaturen unter 0°C erhebliche Mengen Sauergas zu lösen vermag, als besonders geeignet erwiesen. Dabei hat es sich als ausserordentlich günstig erwiesen, dass die Henry-Koeffizienten beider Komponenten verschieden sind, so dass bei einer physikalischen Wäsche die unterschiedliche Löslichkeit von Schwefelwasserstoff und Kohlendioxid im Waschmittel zur selektiven Schwefelwasserstoff- und Kohlendioxid-Auswaschung ausgenützt werden kann.

Ein Verfahren der eingangs genannten Art ist beispielsweise in den Linde-Berichten aus Technik und Wissenschaft, Nr. 33 vom Mai 1973 auf Seite 10 beschrieben. Dabei wird ein wasserstoffhaltiges Rohgas in einer Waschsäule zunächst durch Wäsche mit bereits mit Kohlendioxid vorbeladenem Methanol von Schwefelverbindungen befreit. Das dabei anfallende, mit Kohlendioxid und Schwefelwasserstoff beladene Waschmittel wird nach einer Entspannung und Rückführung der dabei ausgasenden Bestandteile in das Rohgas in eine Schwefelwasserstoff-Anreicherungssäule geleitet. In dieser Säule wird unter Ausnutzung der unterschiedlichen Löslichkeit von Kohlendioxid und Schwefelwasserstoff im Methanol eine Teilregenerierung durchgeführt, bei der am Kopf der Schwefelwasserstoff-Anreicherungssäule ein an Kohlendioxid angereichertes Restgas, das keinen Schwefelwasserstoff enthält, austritt, während im Sumpf der Säule Methanol anfällt, das nunmehr eine relativ höhere Beladung mit Schwefelwasserstoff aufweist als das ursprünglich aus dem Sumpf der Waschsäule abgezogene Methanol. Die aus dem Sumpf der Schwefelwasserstoff-Anreicherungssäule abgezogene Fraktion wird in einer nachfolgenden Regeneriersäule in gereinigtes Methanol, das im Kreislauf in die Waschsäule zurückgeführt wird, und in eine Schwefelwasserstoff-Fraktion zerlegt.

Die Schwefelwasserstoff-Fraktion, die, in Abhängigkeit vom Schwefelgehalt des zu reinigenden Gasstroms, üblicherweise zwischen 10 und 70% Schwefelwasserstoff und Kohlenoxidsulfid enthält, darf aus Gründen des Umweltschutzes nicht einfach in die Luft abgegeben werden, son-

dern wird üblicherweise in einer Schwefelgewinnungsanlage, beispielsweise einer Claus-Anlage, aufgearbeitet. Für den wirtschaftlichen Betrieb derartiger nachgeschalteter Schwefelgewinnungsanlagen sind Schwefelwasserstoff-Gehalte von mindestens 20 bis 30% Mol-% notwendig.

Ein Nachteil des erwähnten bekannten Verfahrens ist darin zu sehen, dass bei der Reinigung von schwefelarmen Gasströmen eine Schwefelwasserstoff-Fraktion niedriger Konzentration anfällt. In manchen Anwendungsfällen, beispielsweise bei der Kohlenmonoxid-Konvertierung von Gasströmen, kann es notwendig sein, einen Mindestgehalt von Schwefelwasserstoff oder Kohlenoxidsulfid im Einsatzgas einzuhalten, da ansonsten die Gefahr besteht, dass ein schwefelhaltiger Katalysator Schwefel abgibt und dabei seine Aktivität verliert. Bei handelsüblichen schwefelhaltigen Konvertierungskatalysatoren ist es deshalb erforderlich, dass etwa 0,2 Mol.% Schwefelwasserstoff und/oder Kohlenoxidsulfid im Gasstrom enthalten sind. Wenn dieser Mindestschwefelgehalt unterschritten wird, müssen Schwefelverbindungen zugemischt werden. Am einfachsten geschieht dies durch Zugabe von auf den Rohgasdruck verdichtetem, in der Sauergaswäsche gewonnenem Schwefelwasserstoff. Insbesondere bei der Rückführung einer relativ schwach angereicherten Schwefelwasserstoff-Fraktion ist hierfür jedoch eine hohe Verdichterenergie erforderlich.

Der Erfindung liegt die Aufgabe zugrunde, ein Verfahren der eingangs genannten Art so auszugestalten, dass aus dem Regenerierteil der Wäsche eine möglichst stark angereicherte Schwefelwasserstoff-Fraktion abgezogen werden kann.

Diese Aufgabe wird dadurch gelöst, dass beim eingangs erwähnten Verfahren die schwefelwasserstoffhaltige Gasphase mit einem Teilstrom der Waschflüssigkeit gewaschen wird, und dass ein dabei anfallender zweiter beladener Waschflüssigkeitsstrom durch Rektifikation in regenerierte Waschflüssigkeit und in eine schwefelwasserstofffreie Gasphase zerlegt wird.

Erfindungsgemäss wird damit vorgeschlagen, die üblicherweise aus der Wäsche abgezogene Schwefelwasserstoff-Fraktion noch einmal zu waschen. Als Waschflüssigkeit wird dabei ein Teilstrom des Waschmittels verwendet, der die Hauptmenge des Schwefelwasserstoffs löst, während die übrigen in der Schwefelwasserstoff-Fraktion vorwiegend enthaltenen Bestandteile Kohlendioxid und Stickstoff am Kopf der erfindungsgemäss vorgeschlagenen Waschstufe austreten. Das in dieser Verfahrensstufe anfallende Waschmittel ist stark mit Schwefelwasserstoff beladen und wird in einer nachfolgenden Rektifikation in reine, der Sauergaswäsche wieder zuzuführende Waschflüssigkeit und in eine hoch angereicherte Schwefelwasserstoff-Fraktion zerlegt.

In vielen Fällen, insbesondere bei der Reinigung eines mit relativ grossen Mengen an Kohlendioxid verunreinigten Gasstroms, enthält die Wäsche eine Schwefelwasserstoff-Anreicherungsstufe, in der wenigstens ein Teil des gelösten Kohlendioxids abgetrennt wird. In Zusammenhang mit einem solchen Verfahren wird in günstiger Weiterbildung der Erfindung die Wäsche der schwefelwasserstoffhaltigen Gasphase mit einem Teilstrom der aus der Schwefelwasserstoff-Anreicherungsstufe abgezogenen, teilweise vom Kohlendioxid befreiten Waschflüssigkeit durchgeführt.

Um die Rektifikation unter günstigen Bedingungen durchzuführen, wird die zweite beladene Waschflüssigkeit vorzugsweise auf einen höheren Druck gepumpt, was mit geringem Energieaufwand möglich ist.

In einer besonders bevorzugten Ausgestaltung der Erfindung wird die bei der Rektifikation erzeugte schwefelwasserstoffreiche Gasphase einer partiellen Kondensation unterzogen, um eine Fraktion flüssigen Schwefelwasserstoffs zu gewinnen. Durch diese partielle Kondensation erfolgt eine weitere Konzentrierung des Schwefelwasserstoffs, da aus dem zweiten beladenen Waschflüssigkeitsstrom ebenfalls noch bei der Rektifikation abgetrenntes Kohlendioxid bei tieferen Temperaturen als Schwefelwasserstoff flüssig anfällt und somit neben restlichen Schwefelwasserstoff in der Gasphase verbleibt. Bei dieser Verfahrensführung kann ein Flüssigkeitsstrom gewonnen werden, der Schwefelwasserstoff und gegebenenfalls Kohlenoxidsulfid in einer Konzentration von über 95%, beispielsweise von 98%, enthält. Die bei der partiellen Kondensation anfallende Gasphase enthält das aus den zweiten beladenen Waschflüssigkeitsstrom abgetrennte Kohlendioxid und daneben noch einen relativ hohen Anteil nicht kondensierten Schwefelwasserstoffs, so dass diese Fraktion beispielsweise in einer Claus-Anlage auf elementaren Schwefel aufgearbeitet werden kann.

Die Gewinnung einer hoch konzentrierten flüssigen Schwefelwasserstoff-Fraktion ist insbesondere in solchen Fällen von Vorteil, in denen Schwefelverbindungen in katalytische, unter erhöhtem Druck laufende Prozesse geführt werden müssen, um beispielsweise eine Schwefelabgabe von Katalysatoren zu verhindern. Die Zugabe von Schwefelwasserstoff kann ausserdem in speziellen Fällen zweckmässig sein, um innerhalb einer Reaktionszone bestimmte Reaktionen zu ermöglichen bzw. unerwünschte Komponenten abzubauen. Neben der bereits erwähnten Kohlenmonoxid-Konvertierung sind Schwefelwasserstoff-Zugaben beispielsweise bei Alkylierungen oder im Rahmen von verschiedenen Hydrierungen, beispielsweise Kohlehydrierungen, erforderlich oder zweckmässig.

In einer anderen besonders vorteilhaften Ausgestaltung der Erfindung wird im Anschluss an die Wäsche der schwefelwaserstoffhaltigen Gasphase und vor der Rektifikation der dabei anfallenden beladenen Waschflüssigkeit eine Strippung vorgesehen. Im zweiten beladenen Waschflüssigkeitsstrom gelöstes Kohlendioxid wird dabei teilweise abgestrippt, wodurch in der anschliessenden Rektifikation eine besonders stark mit Schwefelwasserstoff angereicherte Fraktion gewonnen werden kann. Auch in Verbindung mit der Gewinnung einer flüssigen Schwefelwasserstoff-Fraktion lassen sich bei einer derartigen Verfahrensweise noch Restgasfraktionen mit einem Schwefelwasserstoffgehalt von etwa 70 Mol.% gewinnen, so dass eine Schwefelgewinnung aus dieser Fraktion unter günstigen Bedingungen möglich ist.

Die bei der erfindungsgemässen nachgeschalteten Wäsche nicht im Waschmittel gelösten Bestandteile bestehen im wesentlichen aus Stickstoff und Kohlendioxid und verlassen die Waschstufe am Kopf einer entsprechenden Waschsäule. Da diese Fraktion im allgemeinen noch Schwefelwasserstoff und gegebenenfalls Kohlenoxidsulfid in geringen Mengen enthalten kann, wird sie in weiterer Ausgestaltung des erfindungsgemässen Verfahrens in die Schwefelwasserstoff-Anreicherungsstufe zurückgeführt, wo die noch enthaltenen Schwefelverbindungen ausgewaschen werden. Die für die Umwelt unschädlichen Bestandteile Stickstoff und Kohlendioxid verlassen die Schwefelwasserstoff-Anreicherungsstufe gemeinsam mit den in dieser Verfahrensstufe ohnehin abgezogenen Bestandteilen, im wesentlichen Kohlendioxid.

Eine weitere Ausgestaltung des erfindungsgemässen Verfahrens bezieht sich auf die Reinigung eines Schwefelwasserstoff und $C_{4+}$-Kohlenwasserstoffe enthaltenden Gasstroms. Erfahrungsgemäss ist es bei einer physikalsichen Wäsche mit Methanol nicht möglich, eine Trennung von $C_{4+}$-Kohlenwasserstoffen und Schwefelwasserstoff durchzuführen, da die Löslichkeit dieser Komponenten im Methanol zu ähnlich ist. Dagegen ist eine rektifikatorische Trennung möglich. In weiterer Ausgestaltung der Erfindung wird deshalb vorgeschlagen, eine durch Rektifikation und partielle Kondensation gewonnene, mit Schwefelwasserstoff und $C_{4+}$-Kohlenwasserstoffen angereicherte flüssige Fraktion in einer weiteren nachgeschalteten Rektifikation in eine Fraktion flüssiger $C_{4+}$-Kohlenwasserstoffe und in eine gasförmige schwefelwasserstoffreiche Fraktion zu zerlegen. Wenn die Schwefelwasserstoff-Fraktion dabei einer unter erhöhtem Druck betriebenen Reaktionszone zugeleitet wird, ist es weiterhin zweckmässig, diese Fraktion einer Totalkondensation zu unterziehen und nach Abtrennung eines für die Rektifikation benötigten Rücklaufstroms die verbleibende Fraktion auf den gewünschten hohen Druck zu pumpen. Die Druckerhöhung des Schwefelwasserstoffs mit einer Pumpe bringt gegenüber der Verwendung eines Kompressors nicht nur den Vorteil einer erheblichen Energieeinsparung, sondern dadurch werden darüber hinaus die Probleme vermieden, die wegen der extremen Giftigkeit von Schwefelwasserstoff bei der Verdichtung einer konzentrierten Schwefelwasserstoff-Fraktion auftreten.

Eine zur Durchführung des erfindungsgemässen Verfahrens geeignete Anlage besteht aus einer Waschstufe mit einer Waschsäule, einer Schwefelwasserstoff-Anreicherungssäule und einer Regeneriersäule als konventionellen Bauelementen und ist dadurch gekennzeichnet, dass vom Kopf der Regeneriersäule eine Leitung zum unteren Bereich einer zweiten Waschsäule führt, dass Leitungen vom oberen Bereich der zweiten Waschsäule zum unteren Bereich und vom Kopf der zweiten Waschsäule zum mittleren Bereich der Schwefelwasserstoff-Anreicherungssäule führen, dass ferner vom Sumpf der zweiten Waschsäule eine Leitung zum mittleren Bereich einer Rektifiziersäule führt, dass vom Sumpf der Rektifiziersäule eine Leitung zum oberen Bereich der ersten Waschsäule führt und dass der Kopf der Rektifiziersäule mit einer Kühleinrichtung verbunden ist.

Sofern eine Strippung des zweiten beladenen Waschmittelstroms zur Entfernung von gelöstem Kohlendioxid beabsichtigt ist, ist es ferner zweckmässig, eine Strippzone im unteren Teil der zweiten Waschsäule vorzusehen. Das Strippgas, beispielsweise ein Inertgas wie Stickstoff, und das abgestrippte Kohlendioxid treten dann gemeinsam mit den in der zweiten Waschsäule nicht abgetrennten Komponenten aus und werden der Schwefelwasserstoff-Anreicherungssäule zugeführt.

Sofern das erfindungsgemässe Verfahren mit der Gewinnung von $C_{4+}$-Kohlenwasserstoffen verbunden wird, wird der Kopf der Rektifiziersäule über Leitungen und über die Kühleinrichtung mit einer weiteren Rektifiziersäule verbunden.

Weitere Einzelheiten der Erfindung werden nachfolgend anhand zweier in den Figuren schematisch dargestellter Ausführungsbeispiele erläutert.

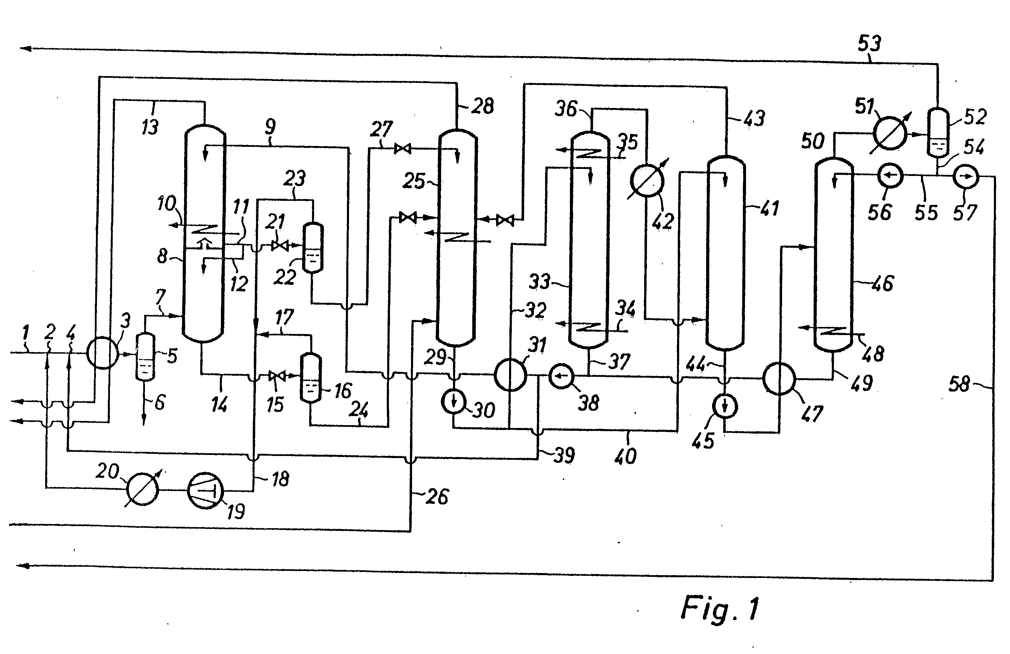

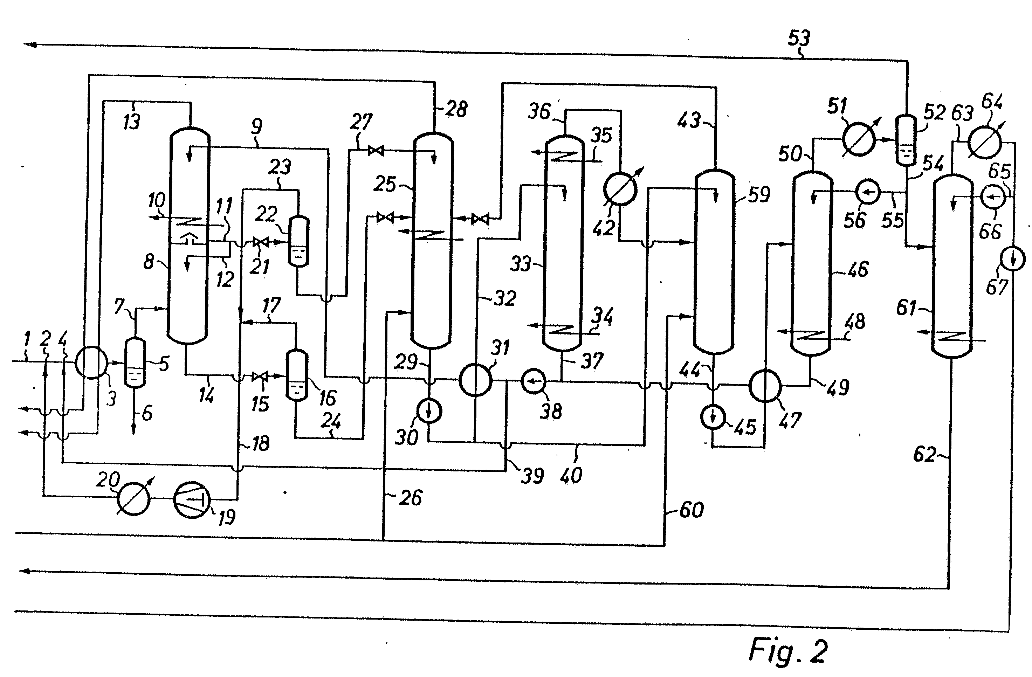

Die Fig. 1 zeigt eine einfache Ausführungsform der Erfindung, während in der Fig. 2 ein Verfahren dargestellt ist, das durch eine Strippung der zweiten beladenen Waschflüssigkeit und durch eine $C_{4+}$-Kohlenwasserstoffabtrennung erweitert ist.

Bei dem in der Figur 1 dargestellten Ausführungsbeispiel wird ein wasserstoffreiches Rohgas, beispielsweise ein durch partielle Oxidation und nachfolgende Kohlenmonoxid-Konvertierung gewonnenes Rohgas, über Leitung 1 herangeführt und nach Vermischung mit einem Rückführgas bei 2 einem Wärmetauscher 3 zugeführt, in dem es auf tiefe Temperaturen, beispielsweise auf Temperaturen zwischen –20 und –40°C, abgekühlt wird. Vor der Kühlung des Rohgases wird bei 4 eine geringe Menge Methanol eingespritzt, um eine Eisbildung bei der Abkühlung zu verhindern. Das abgekühlte Gas wird in einem Abscheider 5 vom bei der Abkühlung gebildeten Kondensat, im wesentlichen im Rohgas enthaltenes Wasser und schwerere Kohlenwasserstoffe, getrennt. Das Kondensat wird über Leitung 6 aus dem betrachteten Teil der Anlage abgezogen, während das abgekühlte Rohgas über Leitung 7 in den unteren Bereich einer Waschsäule 8 eingeführt wird. Die Wäsche des Rohgases wird in diesem speziellen Ausführungsfall in einer Waschsäule 8 mit zwei verschiedenen Abschnitten durchgeführt. Am Kopf der Waschsäule wird über Leitung 9 regeneriertes reines Methanol als Waschflüssigkeit aufgegeben. Dadurch wird im oberen Abschnitt der Waschsäule eine Feinreinigung des Gases durchgeführt, wobei letzte Spuren an Sauergasen im Methanol gelöst werden. Das herabrieselnde Methanol nimmt dann den grössten Teil des im Rohgas enthaltenen Kohlendioxids auf. Zur Abführung der dabei entwickelten grossen Lösungswärme wird das Methanol in einer Kühlstufe 10 durch ein Kältemittel abgekühlt. Ein Teilstrom 12 dieses mit Kohlendioxid vorbeladenen Methanols wird dem unteren Bereich der Waschsäule 8 aufgegeben, aus dem es den im Rohgas enthaltenen Schwefelwasserstoff abtrennt. Da durch die Auswaschung von Schwefelwasserstoff und gegebenenfalls im Rohgas enthaltenen Kohlenoxidsulfid nur eine geringe Erwärmung des Methanols eintritt, ist in dieser Stufe keine Kühlung erforderlich.

Der auf seinem Strömungsweg durch die Waschsäule 8 zunächst vom Schwefelwasserstoff und dann vom Kohlendioxid befreite Rohgasstrom wird über Leitung 13 vom Kopf der Waschsäule 8 abgezogen und nach Erwärmung im Wärmetauscher 3 gegen abzukühlendes Rohgas als gereinigter Wasserstoff aus dem betrachteten Teil der Anlage abgezogen.

Im Sumpf der Waschsäule 8 sammelt sich mit Schwefelwasserstoff und Kohlendioxid beladenes Methanol, das über Leitung 14 abgezogen und nach Entspannung im Ventil 15 in einen Abscheider 16 geleitet wird. Die bei der Entspannung 15 entstehende wasserstoffreiche Gasphase wird über die Leitungen 17 und 18 zum Verdichter 19 geführt, dort auf den Rohgasdruck rückverdichtet und nach Abzug der Verdichtungswärme im Nachkühler 20 dem Rohgasstrom bei 2 zugemischt.

In entsprechender Weise wird das über Leitung 11 abgezogene, mit Kohlendioxid beladene Methanol im Ventil 21 entspannt und im Abscheider 22 von den dabei ausgasenden Bestandteilen abgetrennt. Die Gasphase gelangt über Leitung 23 in die Leitung 18 und wird gemeinsam mit der Gasfraktion aus dem Abscheider 16 ins Rohgas zurückgeführt. Das im Abscheider 16 anfallende, mit Schwefelwasserstoff und Kohlendioxid beladene Methanol wird über Leitung 24 in den mittleren Bereich einer Schwefelwasserstoff-Anreicherungssäule 25 eingespeist. In dieser Säule wird ein Teil des im Methanol gelösten Kohlendioxids durch Strippung mit Stickstoff abgetrennt. Der Stickstoff wird dazu über Leitung 26 in den unteren Bereich der Schwefelwasserstoff-Anreicherungssäule eingespeist. Um zu verhindern, dass am Kopf der Schwefelwasserstoff-Anreicherungssäule 25 Schwefelwasserstoff austritt, wird über Leitung 27 am Kopf der Säule 25 ein mit Kohlendioxid beladenes Methanol aus dem Abscheider 22 aufgegeben. Dieses teilbeladene Methanol wirkt für durch die Strippung freigesetzten Schwefelwasserstoff als Waschmittel, so dass am Kopf der Säule 25 über Leitung 28 ein schwefelfreier Gasstrom abgezogen wird, der im wesentlichen nur aus Kohlendioxid und Stickstoff besteht und nach Anwärmung im Wärmetauscher 3 gegen Rohgas an die Umgebung abgegeben werden kann.

Im Sumpf der Schwefelwasserstoff-Anreicherungssäule 25 fällt ein Methanol an, das den gesamten aus dem Rohgas abgetrennten Schwefelwasserstoff, gegebenenfalls das im Rohgas enthaltene Kohlenoxidsulfid sowie einen Teil des ausgewaschenen Kohlendioxids enthält. Dieses Methanol wird über Leitung 29 abgezogen und durch eine Pumpe 30 nach Erwärmung im Wärmetauscher 31 über Leitung 32 in eine Regeneriersäule 33 eingespeist. In der Regeneriersäule werden die noch im Methanol gelösten Bestandteile mit Methanoldampf ausgetrieben. Zur Erzeugung des Methanoldampfs ist im unteren Bereich der Regeneriersäule 13 eine mit Dampf betriebene Heizung 34 vorgesehen. Die Methanoldämpfe werden am Kopf der Säule durch eine Kühlung 35 wieder auskondensiert, so dass über Leitung 36 lediglich die aus dem Methanol freigesetzten Komponenten abgezogen werden. Im Sumpf der Regeneriersäule anfallendes gereinigtes Methanol wird über Leitung 37 abgezogen und durch die Pumpe 38 zunächst durch den Wärmetauscher 31 und anschliessend in die Leitung 9 gefördert, um der Waschsäule 8 erneut aufgegeben zu werden. Ein Teilstrom des regenerierten Methanols wird über Leitung 39 abgezweigt und bei 4 zur Vermeidung von Eisbildung in den Rohgasstrom vor dessen Abkühlung eingeführt.

Ein Teilstrom von ungefähr 5 bis 10% des aus dem Sumpf der Schwefelwasserstoff-Anreicherungssäule 25 abgezogenen Methanols wird über Leitung 40 abgezweigt und als Waschmittel für eine Waschsäule 41 verwendet. In dieser Waschsäule wird das vom Kopf der Regeneriersäule über Leitung 36 abgezogene Gas nach dessen Abkühlung im Wärmetauscher 42 behandelt. In dem über Leitung 40 dem oberen Bereich der Waschsäule 41 aufgegebenen teilbeladenen Methanol löst sich der im Gas enthaltene Schwefelwasserstoff, so dass am Kopf der Waschsäule 41 über Leitung 43 ein Gasstrom abgezogen wird, der weitgehend frei von Schwefelwasserstoff ist. Um zu vermeiden, dass restliche, in diesem Strom noch enthaltene Schwefelverbindungen in die Atmosphäre abgegeben werden, wird der Strom in einen mittleren Bereich der Schwefelwasserstoff-Anreicherungssäule 25 eingespeist. Während der im wesentlichen aus Kohlendioxid bestehende Gasstrom über Leitung 28 abgezogen wird, werden die in ihm enthaltenen Schwefelverbindungen durch über Leitung 27 aufgegebenes teilbeladenes Methanol ausgewaschen.

Im Sumpf der Waschsäule 41 anfallendes, stark mit Schwefelwasserstoff beladenes Methanol wird über Leitung 44 abgezogen, in einer Pumpe 45 auf den Druck der Rektifiziersäule 46 verdichtet und nach Erwärmung im Wärmetauscher 47 in den mittleren Bereich der Rektifiziersäule 46 eingespeist.

In der Rektifiziersäule 46 wird das beladene Waschmittel in eine am Sumpf anfallende Fraktion reinen Methanols und in eine Schwefelwasserstoff-Fraktion hoher Konzentration zerlegt. Das Methanol wird aus dem mit einer Heizung 48 versehenen Sumpf der Rektifiziersäule über Leitung 49 abgezogen und nach Abkühlung im Wärmetauscher 47 gemeinsam mit dem aus der Regeneriersäule 33 über Leitung 37 abgezogenen Methanol in die Hauptwäsche 8 zurückgeführt.

Die schwefelwasserstoffreiche Fraktion, die am Kopf der Rektifiziersäule 46 anfällt, wird über Leitung 50 abgezogen, im Wärmetauscher 51 partiell kondensiert und anschliessend im Abscheider 52 einer Phasentrennung unterzogen. Die nicht kondensierten Bestandteile enthalten fast alles Kohlendioxid, das noch im Sumpf der Waschsäule 41 im Methanol gelöst war und daneben einen Anteil nicht kondensierten Schwefelwasserstoffs. Diese Fraktion wird über Leitung 53 abgezogen und beispielsweise in eine Claus-Anlage zur Schwefelgewinnung geführt. Das Kondensat aus dem Abscheider 52 wird über Leitung 54 abgezogen und, nachdem ein Teilstrom 55 über eine Pumpe 56 zur Deckung des Rücklaufbedarfs der Rektifiziersäule 46 abgezweigt wurde, in einer Hochdruckpumpe 57 auf hohen Druck gepumpt und danach über Leitung 58 abgezogen. Diese Fraktion flüssigen Schwefelwasserstoffs kann beispielsweise in eine der Rohgaswäsche vorgeschalteten Kohlenmonoxid-Konvertierung eingespeist werden, falls der Schwefelgehalt des der Konvertierung zuzuführenden Gases so gering ist, dass ohne Zugabe von Schwefelwasserstoff eine Katalysatorschädigung erfolgen würde.

Bei dem in der Fig. 2 dargestellten Ausführungsbeispiel sind gegenüber dem vorstehend beschriebenen Beispiel zwei Änderungen vorgenommen, die jedoch unabhängig voneinander sind und auch jeweils einzeln ausgeführt werden können. Die Abweichungen beziehen sich auf die zweite Wäsche 41 zur Konzentrierung des Schwefelwasserstoffs sowie auf eine Gewinnung von $C_{4+}$-Kohlenwasserstoffen.

Das aus der Regeneriersäule 33 über Leitung 36 abgezogene Kopfprodukt wird nach Kühlung im Wärmetauscher 42 in diesem Fall in den mittleren Bereich einer kombinierten Wasch- und Strippsäule 59 eingeleitet. Während der obere Teil der Säule 59 die Funktion der vorstehend beschriebenen Waschsäule 41 ausübt, werden im unteren Bereich aus dem neben Schwefelwasserstoff noch gelöstes Kohlendioxid enthaltenden Methanol der grösste Teil des Kohlendioxids abgestrippt. Hierzu wird ein über Leitung 60 in den unteren Bereich der Säule 59 eingespeistes Strippgas, beispielsweise Stickstoff, verwendet. Das nunmehr an Kohlendioxid verarmte Methanol wird in gleicher Weise wie im vorstehend beschriebenen Beispiel in der Rektifiziersäule 46 aufgearbeitet. Die am Kopf anfallende Schwefelwasserstoff-Fraktion wird durch partielle Kondensation in eine Gasphase mit hohem Schwefelwasserstoffanteil, der beispielsweise bei etwa 70 Mol.% liegen kann, und in eine flüssige Phase zerlegt.

Da bei der Reinigung eines schwerere Kohlenwasserstoffe enthaltenden Gasstroms die $C_{4+}$-Kohlenwasserstoffe aufgrund ihres mit Schwefelwasserstoff vergleichbaren Löslichkeitsverhaltens in Methanol gemeinsam mit dem Schwefelwasserstoff im Kondensat des Abscheiders 52 anfallen, wird dieses Kondensat in eine weitere Rektifiziersäule 61 eingespeist und dort in ein aus $C_{4+}$-Kohlenwasserstoffen bestehendes Sumpfprodukt und in ein aus Schwefelwasserstoff bestehendes Kopfprodukt zerlegt. Die Kohlenwasserstoffe werden über Leitung 62 aus dem betrachteten Teil der Anlage abgezogen. Der gasförmig anfallende Schwefelwasserstoff wird über Leitung 63 abgezogen und anschliessend in einem Wärmetauscher 64 einer Totalkondensation unterzogen. Aus der dabei anfallenden Flüssigkeit wird ein Teilstrom 65 abgezogen und über eine Pumpe 66 als Rücklauf auf die Rektifiziersäule 61 gegeben, während der restliche Teil des flüssigen Schwefelwasserstoffs in einer Hochdruckpumpe 67 auf den gewünschten Abgabedruck gepumpt wird.

In einem speziellen Ausführungsbeispiel wird ein Rohgas gereinigt, das zu 58,0 Mol.% aus Wasserstoff besteht und daneben 1,2 Mol.% Inertgase (Stickstoff, Argon, Kohlenmonoxid), 40,6 Mol.% Kohlendioxid, 0,14 Mol.% Schwefelwasserstoff, 0,06 Mol.% Methan und 3 ppm Kohlenoxidsulfid enthält. Dieses Rohgas wird bei einem Druck von etwa 36 bar und bei einer Temperatur von etwa –33°C mit Methanol gewaschen. Aus der Waschsäule 8 tritt über Leitung 13 gereinigter Wasserstoff mit einer Konzentration von 97,9 Mol.% aus, der lediglich noch durch 2,0 Mol.% Inertgase, 0,1% Methan und 100 ppm Kohlendioxid verunreinigt ist. Aus der Schwefelwasserstoff-Anreicherungssäule 25 wird über Leitung 28 ein Restgas abgezogen, das 0,3 Mol.% Wasserstoff, 13,8 Mol.% Inertgase (im wesentlichen über Leitung 26 herangeführtes Stickstoff als Strippgas), 85,9 Mol.% Kohlendioxid und nur 10 ppm Schwefelwasserstoff enthält. Dieses Restgas verlässt die Anlage unter einem Druck von etwa 1,1 bar. In diesem Beispiel, das eine mit einem Strippteil versehene zweite Waschsäule 59 verwendet, fällt nach der partiellen Kondensation des Kopfprodukts der Rektifiziersäule 46 eine Gasphase an, die über Leitung 53 zu einer Claus-Anlage geleitet wird und die neben 20 Mol.% Stickstoff und 13,3 Mol.% Kohlendioxid 66,7 Mol.% Schwefelwasserstoff enthält. Diese Fraktion wird unter einem Druck von etwa 5 bar aus der Anlage abgegeben. Die der Pumpe 57 zugeführte Fraktion flüssigen Schwefelwasserstoffs enthält als Verunreinigungen lediglich 2,46 Mol.% Kohlendioxid und 0,25 Mol.% Kohlenoxidsulfid.

## Patentansprüche

1. Verfahren zum Abtrennen von mindestens Schwefelwasserstoff und Kohlendioxid aus einem diese Komponenten enthaltenden Gasgemisch durch Wäsche mit einer physikalisch wirkenden Waschflüssigkeit, die für Schwefelwasserstoff ein besseres Lösungsvermögen als für Kohlendioxid besitzt, wobei aus der Wäsche mindestens ein erster mit Schwefelwasserstoff und Kohlendioxid beladener Waschflüssigkeitsstrom abgezogen und anschliessend durch Regenerierung in eine schwefelwasserstoffhaltige Gasphase und regenerierte Waschflüssigkeit zerlegt wird, dadurch gekennzeichnet, dass die schwefelwasserstoffhaltige Gasphase mit einem Teilstrom der Waschflüssigkeit gewaschen wird und dass ein dabei anfallender zweiter beladener Waschflüssigkeitsstrom durch Rektifikation in regenerierte Waschflüssigkeit und in eine schwefelwasserstoffreiche Gasphase zerlegt wird.

2. Verfahren nach Anspruch 1, dadurch gekennzeichnet, dass die Wäsche eine Schwefelwasserstoff-Anreicherungsstufe enthält, in der aus dem ersten beladenen Waschflüssigkeitsstrom wenigstens ein Teil des Kohlendioxids abgetrennt wird, und dass die schwefelwasserstoffhaltige Gasphase mit einem Teilstrom des aus der Schwefelwasserstoff-Anreicherungsstufe abgezogenen Waschflüssigkeitsstroms gewaschen wird.

3. Verfahren nach Anspruch 1 oder 2, dadurch gekennzeichnet, das der zweite beladene Waschflüssigkeitsstrom vor der Rektifikation auf einen höheren Druck gepumpt wird.

4. Verfahren nach einem der Ansprüche 1 bis 3, dadurch gekennzeichnet, dass aus der schwefelwasserstoffreichen Gasphase durch partielle Kondensation eine Fraktion flüssigen Schwefelwasserstoffs gewonnen wird.

5. Verfahren nach Anspruch 4, dadurch gekennzeichnet, dass mindestens ein Teil des flüssigen Schwefelwasserstoffs einer mit schwefelhaltigen Katalysatoren betriebenen katalytischen Reaktionszone, in der ein schwefelarmer Einsatz umgesetzt wird, zugeführt wird.

6. Verfahren nach Anspruch 5, dadurch gekennzeichnet, dass die Reaktionszone eine Kohlenmonoxid-Konvertierung ist.

7. Verfahren nach Anspruch 6, dadurch gekennzeichnet, dass die Konvertierung im Rahmen der Erzeugung des Gasgemisches, aus dem mindestens Schwefelwasserstoff und Kohlendioxid abgetrennt werden, durchgeführt wird.

8. Verfahren nach einem der Ansprüche 1 bis 7, dadurch gekennzeichnet, dass vor der Rektifikation zumindest ein Teil des gelösten Kohlendioxids aus dem zweiten beladenen Waschflüssigkeitsstrom abgestrippt wird.

9. Verfahren nach einem der Ansprüche 4 bis 8, dadurch gekennzeichnet, dass aus der Fraktion flüssigen Schwefelwasserstoffs $C_{4+}$-Kohlenwasserstoffe durch Rektifikation abgetrennt werden.

10. Verfahren nach einem der Ansprüche 4 bis 9, dadurch gekennzeichnet, dass die nicht kondensierten Bestandteile der schwefelwasserstoffreichen Gasphase einer Schwefelgewinnungsanlage zugeführt werden.

11. Verfahren nach einem der Ansprüche 2 bis 10, dadurch gekennzeichnet, dass die aus der schwefelwasserstoffhaltigen Gasphase nicht ausgewaschenen Komponenten in die Schwefelwasserstoff-Anreicherungsstufe zurückgeführt werden.

12. Anlage zur Durchführung des Verfahrens nach einem der Ansprüche 1 bis 11, mit einer eine erste Waschsäule (8), eine Schwefelwasserstoff-Anreicherungssäule (25) und eine Regeneriersäule (33) enthaltenden Waschstufe, dadurch gekennzeichnet, dass vom Kopf der Regeneriersäule (33) eine Leitung (36) zum unteren Bereich einer zweiten Waschsäule (41) führt, dass Leitungen (40, 43) vom oberen Bereich der zweiten Waschsäule (41) zum unteren Bereich und vom Kopf der zweiten Waschsäule zum mittleren Bereich der Schwefelwasserstoff-Anreicherungssäule (25) führen, dass vom Sumpf der zweiten Waschsäule eine Leitung (44) zum mittleren Bereich einer Rektifizersäule (46) führt, dass vom Sumpf der Rektifiziersäule eine Leitung (49) zum oberen Bereich der ersten Waschsäule (8) führt und dass der Kopf der Rektifiziersäule mit einer Kühleinrichtung (51) verbunden ist.

13. Anlage nach Anspruch 12, dadurch gekennzeichnet, dass die zweite Waschsäule (59 in Fig. 2) in ihrem unteren Teil eine Strippzone enthält.

14. Anlage nach Anspruch 12 oder 13, dadurch gekennzeichnet, dass der Kopf der Rektifiziersäule (46) über Leitungen (50, 54) und die Kühleinrichtung (51) mit einer weiteren Rektifiziersäule (61) verbunden ist.

## Claims

1. A process for the separation of at least hydrogen sulphide and carbon dioxide from a gas mixture containing these components by washing with a physically acting washing liquid which has a higher dissolving power for hydrogen sulphide than for carbon dioxide, in which at least a first stream of washing liquid charged with hydrogen sulphide and carbon dioxide is withdrawn from the washing step and is subsequently separated by regeneration into a gas phase containing hydrogen sulphide and regenerated washing liquid, characterised in that the hydrogen sulphide-containing gas phase is washed with a partial-stream of the washing liquid and that a second charged stream of washing liquid which results therefrom is separated by rectification into regenerated washing liquid and a gas phase which is rich in hydrogen sulphide.

2. A process as claimed in Claim 1, characterised in that the washing step includes a hydrogen sulphide-concentration stage in which at least a part of the carbon dioxide is separated from the first charged stream of washing liquid; and that the hydrogen sulphide-containing gas phase is washed with a partial-stream of the stream of washing liquid which is withdrawn from the hydrogen sulphide-concentration stage.

3. A process as claimed in Claim 1 or Claim 2, characterised in that the second charged stream of washing liquid is pumped to a higher pressure prior to rectification.

4. A process as claimed in one of Claims 1 to 3, characterised in that a liquid hydrogen sulphide fraction is obtained from the gas phase rich in hydrogen sulphide by partial condensation.

5. A process as claimed in Claim 4, characterised in that at least a part of the liquid hydrogen sulphide is fed to a catalytic reaction zone operated with sulphur-containing catalysts in which a low-sulphur feed is converted.

6. A process as claimed in Claim 5, characterised in that the reaction zone is a carbon monoxide-conversion.

7. A process as claimed in Claim 6, characterised in that the conversion is carried out during the production of the gas mixture from which at least hydrogen sulphide and carbon dioxide are separated.

8. A process as claimed in one of Claims 1 to 7, characterised in that, prior to rectification, at least a part of the dissolved carbon dioxide is stripped from the second charged stream of washing liquid.

9. A process as claimed in one of Claims 4 to 8, characterised in that $C_{4+}$-hydrocarbons are separated by rectification from the liquid hydrogen sulphide fraction.

10. A process as claimed in one of Claims 4 to 9, characterised in that the uncondensed components of the hydrogen sulphide-rich gas phase are fed to a sulphur recovery system.

11. A process as claimed in one of Claims 2 to 10, characterised in that the components which are not washed out of the hydrogen sulphide-containing gas phase are returned to the hydrogen sulphide-concentration stage.

12. Apparatus for carrying out the process as claimed in one of Claims 1 to 11, comprising a washing stage which includes a first washing column (8), a hydrogen sulphide concentration column (25), and a regeneration column (33), characterised in that from the head of the regeneration column (33) a line (36) leads to the lower region of a second washing column (41); that lines (40, 43) lead from the upper region of the second washing column (41) to the lower region, and from the head of the second washing column to the central region of the hydrogen sulphide concentration column (25); that from the sump of the second washing column, a line (44) leads to the central region of a rectifier column (46); that from the sump of the rectifier column a line (49) leads to the upper region of the first washing column (8); and that the head of the rectifier column is connected to a cooling device (51).

13. Apparatus as claimed in Claim 12, characterised in that the lower part of the second washing column (59 in Figure 2) contains a stripping zone.

14. Apparatus as claimed in Claim 12 or Claim 13, characterised in that the head of the rectifier column (46) is connected to a further rectifier column (61) by lines (50, 54) through the cooling device (51).

**Revendications**

1. Procédé pour séparer au moins l'hydrogène sulfuré et le gaz carbonique d'un mélange gazeux contenant ces composants par lavage avec un liquide de lavage agissant physiquement, qui possède pour l'hydrogène sulfureux une meilleure capacité de dissolution que pour le gaz carbonique, de façon qu'au moins un premier courant de liquide de lavage chargé en hydrogène sulfuré et en gaz carbonique soit extrait du bain de lavage et soit ensuite décomposé par régénération en une phase gazeuse contenant de l'hydrogène sulfuré et en liquide de lavage régénéré, caractérisé en ce que la phase gazeuse contenant de l'hydrogène sulfuré est lavée avec un courant partiel du liquide de lavage et en ce qu'un second courant de liquide de lavage chargé ainsi obtenu est décomposé par rectification en liquide de lavage régénéré et en une phase gazeuse riche en hydrogène sulfuré.

2. Procédé selon la revendication 1, caractérisé en ce que le lavage présente une étape d'enrichissement en hydrogène sulfuré dans laquelle au moins une partie du gaz carbonique est séparée du premier courant de liquide de lavage chargé et en ce que la phase gazeuse contenant de l'hydrogène sulfuré est lavée avec un courant partiel du courant de liquide de lavage sortant de l'étape d'enrichissement en hydrogène sulfuré.

3. Procédé selon la revendication 1 ou 2, caractérisé en ce que le second courant de liquide de lavage chargé est porté par pompage, avant la rectification, à une pression supérieure.

4. Procédé selon l'une quelconque des revendications 1 à 3, caractérisé en ce qu'on obtient à partir de la phase gazeuse riche en hydrogène sulfuré, par condensation partielle, une fraction d'hydrogène sulfuré liquide.

5. Procédé selon la revendication 4, caractérisé en ce qu'au moins une partie de l'hydrogène sulfuré liquide est introduite dans une zone de réaction catalytique opérant avec des catalyseurs contenant du soufre, dans laquelle est convertie une charge pauvre en soufre.

6. Procédé selon la revendication 5, caractérisé en ce que la zone de réaction est une zone de conversion en oxyde de carbone.

7. Procédé selon la revendication 6, caractérisé en ce que la conversion est effectuée en connexion avec la production du mélange gazeux à partir duquel sont séparés au moins de l'hydrogène sulfuré et du gaz carbonique.

8. Procédé selon l'une quelconque des revendications 1 à 7, caractérisé en ce que, avant la rectification, au moins une partie du gaz carbonique dissous est extraite du second courant de liquide de lavage chargé.

9. Procédé selon l'une quelconque des revendications 4 à 8, caractérisé en ce que des hydrocarbures $C_{4+}$ sont séparés de la fraction d'hydrogène sulfuré liquide par rectification.

10. Procédé selon l'une quelconque des revendications 4 à 9, caractérisé en ce que les constituants non-condensés de la phase gazeuse riche en hydrogène sulfuré sont introduits dans une installation de récupération de soufre.

11. Procédé selon l'une quelconque des revendications 2 à 10, caractérisé en ce que les constituants non-éliminés par lavage de la phase gazeuse contenant de l'hydrogène sulfuré sont recyclés dans l'étape d'enrichissement en hydrogène sulfuré.

12. Installation pour la mise en œuvre du procédé selon l'une quelconque des revendications 1 à 11, comportant une étape de lavage préservant une colonne de lavage (8), une colonne d'enrichissement en hydrogène sulfuré (25) et une colonne de régénération (33), caractérisée en ce qu'un conduit (36) relie la tête de la colonne de régénération (33) à une zone inférieure d'une seconde colonne de lavage (41), en ce que des conduits (40, 43) relient l'un la zone supérieure de la seconde colonne de lavage (41) à la zone inférieure de la colonne d'enrichissement en hydrogène sulfuré (25), et l'autre la tête de la seconde colonne de lavage (41) à une zone centrale de ladite colonne d'enrichissement, en ce qu'un conduit (44) relie le pied de la seconde colonne de lavage à une zone centrale d'une colonne de rectification (46), en ce qu'un conduit (49) relie le pied de la colonne de rectification à la zone supérieure de la première colonne de lavage (8), et en ce que la tête de la colonne de rectification est reliée à un dispositif de refroidissement (51).

13. Installation selon la revendication 12, caractérisée en ce que la seconde colonne de lavage (59 sur la fig. 2) présente dans sa partie inférieure une zone d'extraction.

14. Installation selon la revendication 12 ou 13, caractérisée en ce que la tête de la colonne de rectification (46) est reliée par l'intermédiaire de conduits (50, 54) et du dispositif de refroidissement (51) à une autre colonne de rectification (61).

Fig. 1

Fig. 2